# EUROPÄISCHE PATENTSCHRIFT

(11) **EP 1 268 256 B1**
(45) Veröffentlichungstag und Bekanntmachung des Hinweises auf die Patenterteilung: **12.11.2003**
(21) Anmeldenummer: 01909421.8
(22) Anmeldetag: 04.01.2001
(51) Int. Cl.: B62D 5/04, B62D 6/00

(54) **STELLGLIED FÜR EINE FAHRZEUG-LENKVORRICHTUNG**
ACTUATOR FOR AN AUTOMOTIVE STEERING SYSTEM
ACTIONNEUR DESTINE A UN SYSTEME DE DIRECTION DE VEHICULE

(30) Priorität: 05.01.2000 DE 10000219
(43) Veröffentlichungstag der Anmeldung: 02.01.2003
(73) Patentinhaber: ROBERT BOSCH GMBH, 70442 Stuttgart (DE); IMS MORAT SÖHNE GmbH, 78151 Donaueschingen (DE)
(72) Erfinder: REIMANN, Gerd, 74232 Abstatt (DE); BOCK, Michael, 71679 Asperg (DE); NAGEL, Willi, 71686 Remseck/Hochdorf (DE); KNECHT, Rolf, 71254 Ditzingen (DE); HAGEDORN, Heinz, Gert, 78628 Rottweil (DE); TINTER, Rüdiger, 78183 Hüfingen (DE); OBERLE, Stephan, 78048 Villingen-Schwenningen (DE); EBLE, Ralph, 78089 Unterkirnach (DE)
(86) Internationale Anmeldenummer: DE0100010
(87) Internationale Veröffentlichungsnummer: WO01049554

(56) Entgegenhaltungen:
- EP-A- 0 908 647
- DE-A- 3 806 292
- DE-A- 19 723 358
- FR-A- 2 456 265
- US-A- 4 561 324
- US-A- 4 598 603
- US-A- 4 729 254

## Beschreibung

### Stand der Technik

Die Erfindung geht aus von einem Stellglied zum überlagerten Lenkeingriff in einer Fahrzeug-Lenkvorrichtung der im Oberbegriff des Anspruchs 1 definierten Gattung. Ein solches Stellglied ist zum Beispiel aus der DE 19 72 3358 A1 bekannt.

Mit solchen Stellgliedern wird der Lenkwinkel der Fahrzeugräder unabhängig vom Lenkradwinkel verändert, wodurch Vorteile hinsichtlich Fahrdynamik, Fahrsicherheit und Fahrkomfort erzielt werden.

Bei einem bekannten Stellglied (DE 38 30 654 A1) ist das Überlagerungsgetriebe als einstufiges Planetengetriebe mit Planetenträger, Planetenräder, Sonnenrad und Hohlrad ausgebildet, wobei das Sonnenrad mit der ersten Eingangswelle und das Hohlrad mit der Ausgangswelle jeweils drehfest verbunden ist und der Planetenträger über ein Schneckengetriebe mit der zweiten Eingangswelle in getrieblicher Verbindung steht. Die erste Eingangswelle ist mit dem Handlenkrad und die Ausgangswelle mit den gelenkten Fahrzeugrädern bzw. damit zwangsgekoppelten Lenkgetriebegliedern antriebsverbunden. Das von einer Elektromotor angetriebene Schneckengetriebe ist selbsthemmend ausgebildet. An der ersten Eingangswelle und an der Ausgangswelle sind Sensoren angeordnet, deren Signale die jeweilige Drehstellung der Welle wiedergeben. Die Signale sind einer Regelvorrichtung zugeführt, welche den an der zweiten Eingangswelle angreifenden Elektromotor steuert.

### Vorteile der Erfindung

Das erfindungsgemäße, ein selbsthemmendes Schneckengetriebe aufweisende Stellglied mit den Merkmalen des Anspruchs 1 hat den Vorteil, daß ein Spielausgleich zwischen Schnecken- und Planetengetriebe erreicht wird. Ein spielfreies Überlagerungsgetriebe ist erforderlich, da Komponenten im Lenkungsstrang grundsätzlich spielfrei sein müssen. Die Ausführung des zweistufigen Planetengetriebes mit Sonnenrädern hat den Vorteil, daß die Sonnenräder direkt auf die Eingangs- bzw. Ausgangswelle gefräst werden können und durch Verzicht auf die teuren metallischen Hohlräder Fertigungskosten eingespart und Länge und Durchmesser des Stellglieds minimiert werden können.

Durch die in den weiteren Ansprüchen aufgeführten Maßnahmen sind vorteilhafte Weiterbildungen und Verbesserungen des im Anspruch 1 angegebenen Stellglieds möglich.

Gemäß einer bevorzugten Ausführungsform der Erfindung sind Mittel zur Unterdrückung eines zwischen den Stufenplaneten und den Sonnenrädern vorhandenen Zahnflankenspiels vorgesehen. Bevorzugt weisen diese Mittel eine radial federnde Lagerung des mindestens einen Stufenplaneten auf dem Planetenträger auf, wobei vorzugsweise mindestens drei Stufenplaneten auf dem Planetenträger angeordnet sind, von denen einer radial federnd gelagert ist. Die beiden zu einem Stufenplaneten verpreßten Planetenräder weisen dabei in den Stufenplaneten unterschiedliche Winkellagen auf. Die Unterdrückung des üblicherweise bei allen Planetengetrieben vorhandenen Zahnflankenspiels garantiert die Spielfreiheit in der Übertragung von Drehwinkeln von der ersten Eingangswelle auf die Ausgangswelle bei inaktivem Elektromotor. Durch die federnde Lagerung eines der Stufenplaneten übt dieser eine radiale Anpreßkraft auf die mit den Stufenplaneten kämmenden Sonnenräder auf, so daß die Zahnflanken in jeder Drehposition immer kraftschlüssig aneinanderliegen.

Gemäß einer vorteilhaften Ausführungsform der Erfindung sitzen die Stufenplaneten jeweils auf einer Achse, deren Enden in jeweils einer im Planetenträger ausgebildeten Lagerstelle aufgenommen sind, und die Lagerstellen mindestens einer Achse sind federnd ausgebildet. Dabei können die die Stufenplaneten vorzugsweise über ein Gleitlager drehbar auf ihren Achsen aufgenommen sein oder die Achsen in den Lagerstellen gleitgelagert und die Stufenplaneten drehfest auf ihren Achsen angeordnet sein. Die federnde Ausbildung der Lagerstellen läßt sich gemäß einer vorteilhaften Ausführungsform der Erfindung dadurch realisieren, daß jeder der beiden Lagerstellen der Achse auf einem Biegearm angeordnet ist, dessen eines Armende federelastisch am Planetenträger festgelegt ist. Der Biegearm ist so ausgebildet, daß er bei montiertem Planetengetriebe eine zu dem kämmenden Sonnenrad hin gerichtete annähernd radial Spannkraft erzeugt.

Gemäß einer vorteilhaften Ausführungsform der Erfindung ist die Schnecke des Schneckengetriebes als aus Kunststoff oder Aluminium hergestellt. Die Schnecke aus Kunststoff wird dabei entweder direkt auf die zweite Eingangswelle oder auf eine Metallhülse aufgespritzt, die auf die zweite Eingangswelle gepreßt wird. Die Herstellung der Schnecke aus Kunststoff hat neben der kostengünstigen Fertigung den Vorteil, daß die Schnecke ein hohes Geräuschdämpfungsvermögen besitzt, was wichtig ist, da die Schnecke mit hoher Drehzahl dreht. Außerdem wird bei Verwendung von Kunststoff geringer Dichte die Schwungmasse der Schecke trotz ihres relativ großen Durchmessers nicht zu groß.

Gemäß einer vorteilhaften Ausführungsform der Erfindung bilden Schneckenrad und Planetenträger eine Baueinheit und sind als ein Spritzgußteii aus einem Werkstoff, z.B. Aluminium oder Kunststoff, gefertigt. Kunststoff hat den Vorteil, daß das Schneckenrad mit dem Spritzprozeß fertiggestellt ist und keine Nacharbeit erfordert. Ein Kunststoff-Schneckenrad ist sehr preisgünstig und hat zudem geräuschdämpfende Eigenschaften. In Abänderung der Ausführung ist der Planetenträger aus Metall, z.B. aus Aluminium, und das Schneckenrad aus Kunststoff gefertigt. Dabei wird das Schneckenrad auf den vorgefertigten Planetenträger aufgespritzt. Durch diese konstruktiven Maßnahmen ergibt sich eine höhere Festigkeit des Planetenträgers, höhere Elastizität und geringere Wärmeausdehnung gegenüber einem aus Kunststoff gefertigten Planetenträger.

Insgesamt ergibt die Summe der Weiterbildungen und Verbesserungen ein technisch optimiertes, marktfähiges Stellglied zum überlagerten Lenkeingriff.

### Zeichnung

Die Erfindung ist anhand von in der Zeichnung dargestellten Ausführungsbeispielen in der nachfolgenden Beschreibung näher erläutert. Es zeigen:
- Fig. 1: einen Längsschnitt eines Stellglieds zum überlagerten Lenkeingriff in einer Fahrzeug-Lenkvorrichtung,
- Fig. 2: eine Prinzipskizze eines Überlagerungsgetriebes im Stellglied gemäß Fig. 1,
- Fig. 3: eine Prinzipskizze des Überlagerungsgetriebes gemäß einem weiteren Ausführungsbeispiel,
- Fig. 4: eine Draufsicht der Ebene IV-IV eines Planetenträgers im Überlagerungsgetriebe gemäß Fig. 1.

### Beschreibung der Ausführungsbeispiele

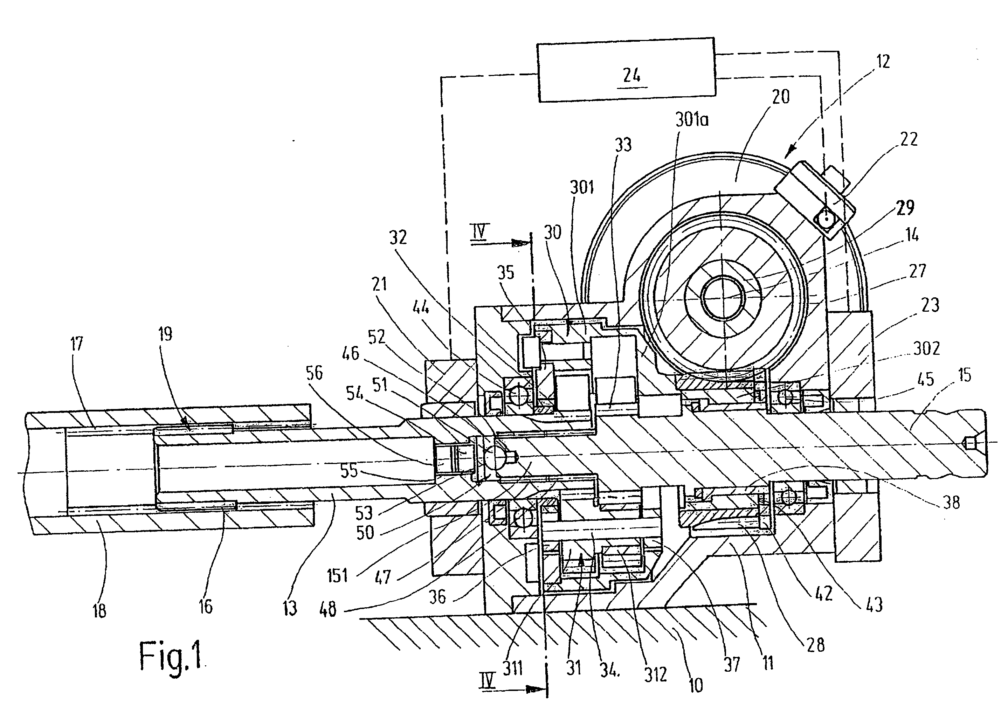

Das in Fig. 1 dargestellte Stellglied zum überlagerten Lenkeingriff in einer Fahrzeug-Lenkvorrichtung stellt eine typische Ausführungsform für den Einbau in der Lenksäule des Fahrzeugs dar und ist mit einem Stellergehäuse 11 über den in Fig. 1 schematisch angedeuteten Lenksäulenträger 10 fest mit der Karosserie verbunden. Das Stellglied weist ein in einem Stellergehäuse 11 aufgenommenes Überlagerungsgetriebe 12 mit zwei Eingangswellen 13,14 und einer Ausgangswelle 15 auf, bei dem das Übersetzungsverhältnis zwischen einer Änderung des Drehwinkels der ersten Eingangswelle 13 und der Änderung des Drehwinkels an der mit der ersten Eingangswelle 13 koaxialen Ausgangswelle 15 durch einen mit der zweiten Eingangswelle gekoppelten Elektromotor 20 in Abhängigkeit von vorgegebenen Parametern, z.B. der Drehgeschwindigkeit der ersten Eingangswelle 13, veränderbar ist. Die erste Eingangsweile 13 ist am Wellenende mit einer Außenkerbverzahnung 16 versehen, in die eine an einem Mantelrohr 18 ausgebildete Innenkerbverzahnung 17 eingreift. Das Mantelrohr 18 steht in direkter Verbindung mit dem hier nicht dargestellten Handlenkrad. Eine Verschiebenabe 19 erlaubt eine axiale Verschiebung des Handlenkrads und überträgt das Handmoment spielfrei auf die erste Eingangswelle 13. Sie ermöglicht eine Längseinstellbarkeit des Handlenkrads und erlaubt das Wegtauchen des Handlenkrads im Crashfall. Die zweite Eingangswelle 14 ist die Antriebswelle des Elektromotors 20. Jeder Eingangswelle 13,14 und der Ausgangswelle 15 ist ein den Drehwinkel und/oder die Drehwinkelgeschwindigkeit der Welle erfassender Sensor 21,22,23 zugeordnet. Die Meßsignale der Sensoren 21 - 23 werden an eine Regelvorrichtung 24 weitergeleitet, die den Elektromotor 20 steuert. Weitere Meßgrößen, wie Fahrgeschwindigkeit, Gierrate u.dgl., können ebenfalls in der Regelvorrichtung 24 ausgewertet werden. Möglich ist auch die Auswertung dieser Meßgrößen in einer weiteren Regelvorrichtung, deren Ausgangssignale dann der Regelvorrichtung 24 zugeführt werden.

Das Überlagerunggetriebe 12 weist ein zweistufiges, modifiziertes Planetengetriebe 25 sowie ein selbsthemmendes Schneckengetriebe 26 auf, über das das Planetengetriebe 25 von dem Elektromotor 20 angetrieben wird. Selbsthemmung bedeutet, daß nur der Elektromotor 20 das Planetengstriebe 25 antreiben kann und nicht umgekehrt. Das Schneckengetriebe 26 besteht aus einer Schnecke 27 aus Kunststoff, die entweder direkt auf die zweite Eingangswelle 14 oder auf eine Metallhülse 29 gespritzt ist, die ihrerseits auf die zweite Eingangswelle 14 gepreßt ist. Das Schneckenrad 28 sitzt auf einem Planetenträger 30 des noch zu beschreibenden planetengetriebes 25 und bildet mit diesem eine Baueinheit. Dabei sind Schneckenrad 28 und Planetenträger 30 als ein Spritzgußteil aus einem Werkstoff, z.B. Aluminium oder Kunststoff, gefertigt. Kunststoff hat den Vorteil, daß das Schneckenrad 28 mit dem Spritzprozeß fertiggestellt ist, preisgünstig ist und geräuschdämpfende Eigenschaften aufweist. Alternativ kann der Planetenträger 30 z.B. aus Aluminium und das Schneckenrad 28 aus Kunststoff gefertigt sein. Neben den bereits genannten Vorteilen ergibt sich dadurch eine höhere Festigkeit, eine höhere Elastizität der noch beschriebenen Biegearme im Planetenträger 30 und eine geringere Wärmeausdehnung des Plantenträgers 30 gegenüber einem Kunststoff-Planetenträger.

Das zweistufige Planetengetriebe 25 weist neben dem Planetenträger 30 mindestens drei im Planetenträger 30 drehend gelagerte Stufenplaneten 31, die auf einem zur Achse des Planetenträgers 30 koaxialen Teilerkreis um gleiche Drehwinkel zueinander versetzt sind, sowie zwei Sonnenräder 32,33 auf. Jeder Stufenplanet 31 besteht aus einem Planetenrad 311 und einem Planetenrad 312, die drehfest miteinander verbunden sind. Die Planetenräder 311 und 312 weisen unterschiedliche Durchmesser und damit unterschiedliche Zähnezahlen auf. Jeder Stufenplanet 31 sitzt gleitgelagert auf einer Achse 34 innerhalb eines Topfteils 301 des Planetenträgers 30, das mit einer Deckelplatte 35 verschlossen ist. Die Achsen 34 sind mit ihren Achsenden jeweils in einer im Topfboden 301a des Topfteils 301 ausgebildeten Lagerstelle 37 und in einer in der Deckelplatte 35 ausgebildeten Lagerstelle 36 drehfest oder drehbar aufgenommen. Vom Topfteil 301 setzt sich ein einstückiges Hülsenteil 302 des Planetenträgers 30 fort, das über ein Gleitlager 38 auf der Ausgangswelle 15 drehgelagert ist und das bereits erwähnte Schneckenrad 28 des Schneckengetriebes 26 trägt. Die Planetenräder 311 der Stufenplaneten 31 kämmen mit dem Sonnenrad 32 und die Planetenräder 312 kämmen mit dem Sonnenrad 33. Die Sonneräder 32 und 33 sind direkt auf die erste Eingangswelle 13 bzw. die Ausgangswelle 15 gefräst.

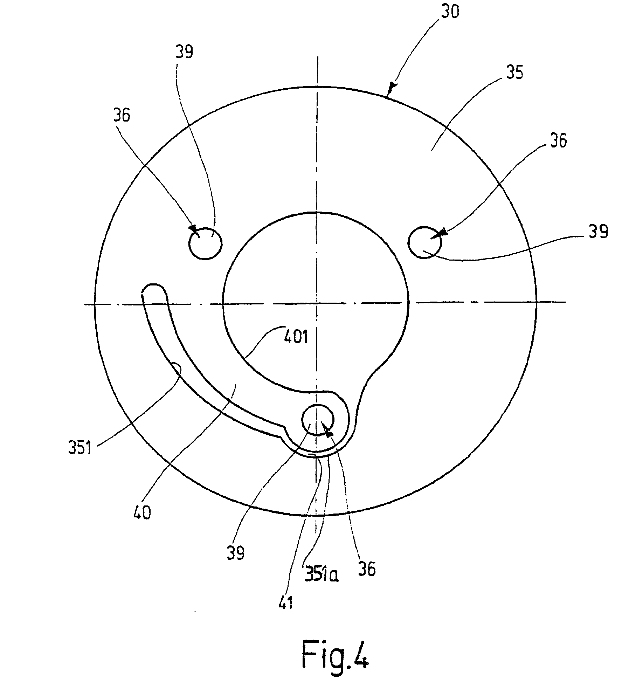

Um Spielfreiheit zwischen der ersten Eingangswelle 13 und der Ausgangswelle 15 des Überlagerungsgetriebes 12 herzustellen, sind im Planetengetriebe 25 Mittel zur Unterdrückung eines zwischen den Sturenplaneten 31 und den beiden Sonnerädern 32,33 vorhandenen Zahnflankenspiels vorgesehen. Diese Mittel umfassen eine radial federnde Lagerung mindestens eines der Stufenplaneten 31 im Planetenträger 30, was durch eine radial federnde Ausbildung der Lagerstellen 36 und 37 dieses Stufenplaneten 31 im Planetenträger 30 bewirkt wird. In Fig. 4 ist die federnde Ausbildung der Lagerstelle 36 für den einen Stufenplaneten 31 in der Deckelplatte 35 des Planetenträgers 30 vergrößert dargestellt. Die federnde Lagerstelle 36 ist als Bohrung 39 auf einem Biegearm 40 ausgebildet, der an der Deckelplatte 35 federelastisch festgelegt ist. Der Biegearm 40 ist dabei so ausgebildet, daß er bei montiertem Planetengetriebe 25 eine zu den kämmenden Sonnenrädern 32,33 hin gerichtete, annähernd radiale Spannkraft erzeugt. Diese Spannkraft wird dadurch hergestellt, daß der Biegearm 40 beim Montieren der Stufenplaneten 31 in Gegenrichtung weg von den kämmenden Sonnenrädern 32,33 gedrückt wird. Der Biegearm 40 ist bogenförmig mit einer im Ausführungsbeispiel der Fig. 4 zur Achse des Planetenträgers 30 konzentrisch verlaufenden, inneren Begrenzungskante 401 ausgebildet, und zwar dadurch, daß er aus der Deckelplatte 35 in der Weise freigeschnitten ist, daß das eine Armende einstückig mit der Deckelplatte 35 verbunden bleibt und das andere Armende bogenförmig abgerundet ist. In diesem bogenförmig abgerundeten Armende ist die Lagerstelle 36 als Bohrung 39 aufgenommen. Bei Überlast legt sich der Biegearm 40 an einem an der Deckelplatte 35 ausgebildeten Anschlag 41 an. Dieser Anschlag 41 ist von dem vorderen Teil der Freischnittkante 351 der Deckelplatte 35 gebildet, die im Spaltabstand von dem Biegearm 40 verläuft und im vorderen Teil in eine der Bogenform angepaßte Mulde 351a übergeht. In gleicher Weise wie zu der Lagerstelle 36 beschrieben, ist die Lagerstelle 37 im Topfboden 301a ausgebildet. Insofern gilt die vorstehende Beschreibung in identischer Weise, wobei lediglich anstelle der Lagerstelle 36 die Lagerstelle 37 und anstelle der Deckelplatte 35 der Topfboden 301a gesetzt werden muß.

Ebenso wie das Planetengetriebe 25 ist auch das Schneckengetriebe 26 spielfrei ausgebildet. Hierzu ist ein zweites, schmales Schneckenrad 42 über eine Ringfeder 43 mit dem ersten Schneckenrad 28 gekoppelt. Die Ringfeder 43 sorgt für tangentialen Spielausgleich, indem sie mit Federkraft jeweils eine Zahnflanke der Schneckenräder 28 und 42 beidseitig an die Zahnflanken der Schnecke 27 anlegt.

Die erste Eingangswelle 13 und die Ausgangswelle 15 sind jeweils über ein Kugellager 44 bzw. 45 im Stellergehäuse 11 gelagert. Zusätzlich ragt die Ausgangswelle 15 mit einem an ihrem einen Stirnende vorstehenden Lagerzapfen 151 in eine sacklochartige, koaxiale Ausnehmung 46 in der ersten Eingangswelle 13 hinein, und die Ausgangswelle 15 stützt sich mit ihrem Lagerzapfen 151 über zwei Nadellager 47, 48 in der Ausnehmung 46 auf der ersten Eingangswelle 13 ab. Das Nadellager 47 liege dabei unmittelbar innerhalb des vom Kugellager 44 umschlossenen Ringbereichs. Über diese Nadellager 47,48 werden Querkräfte bzw. Biegemomente, die über das Mantelrohr 18 in die erste Eingangswelle 13 eingeleitet werden, abgestützt. Ist die Einleitung einer Querkraft oder eines Biegemoments konstruktionsbedingt ausgeschlossen, kann das Nadellager 48 entfallen.

Zwischen der ersten Eingangswelle 13 und der damit koaxialen Ausgangswelle 15 ist ein axialer Spielausgleich vorgesehen. Hierzu ist zwischen der ersten Eingangswelle 13 und der Ausgangswelle 15, bzw. dem Lagerzapfen 151 der Ausgangswelle 15, ein als Gleitlager ausgebildetes Axiallager 50 angeordnet. Das Axiallager 50 umfaßt eine Kugel 51, die in einer stirnseitigen Vertiefung 52 in der Stirnseite des Lagerzapfens 151 der Ausgangswelle 15 aufgenommen ist, und eine Scheibe 53, die im Grunde der Ausnehmung 46 in der ersten Eingangswelle 13 eingelegt ist. Die Scheibe 53 ist axial verschieblich in der Ausnehmung 46 aufgenommen und liegt an der Stirnseite eines Gewindestiftes 54 an, der in einer Innengewindebohrung 55 in der ersten Eingangswelle 13 verschraubt ist. Wird der Gewindestift 54 zugestellt, so verringert sich das Axialspiel zwischen der ersten Eingangswelle 13 und der Ausgangswelle 15, und die Kugel 51 liegt punktförmig an der Scheibe 53 an. Ist die Spielfreiheit erreicht, wird dieser Zustand mit Hilfe einer Sicherungsschraube 56, die ebenfalls in der Innengewindebohrung 55 verschraubbar ist, gesichert.

Gewindestift 54 und sicherungsschraube 56 sind von dem freien Ende der hohl ausgebildeten ersten Eingangswelle 13 aus zugänglich.

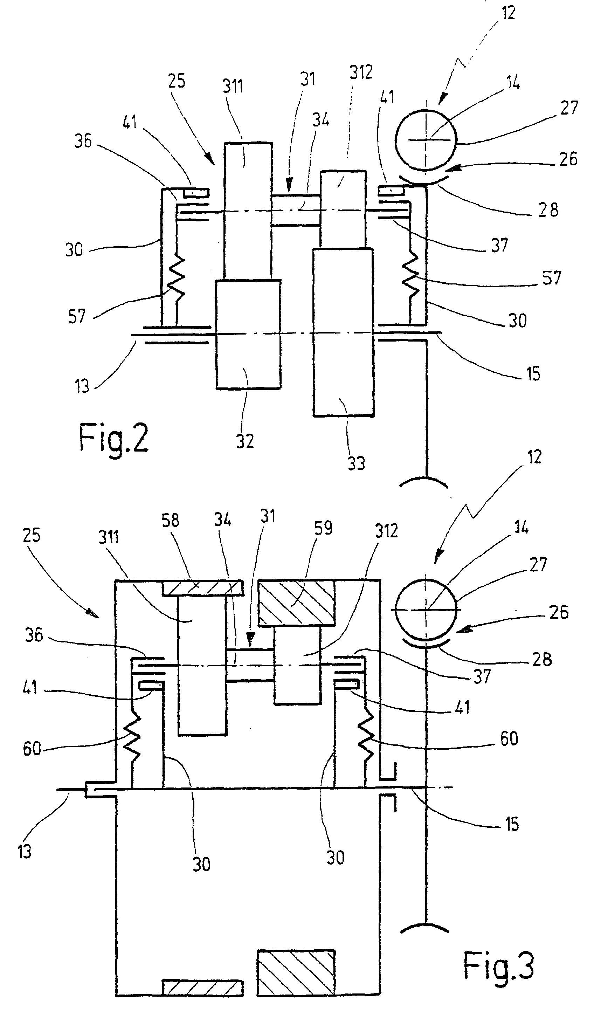

In Fig. 2 ist zur Verdeutlichung des radialen Spielausgleichs in dem beschriebenen Planetengetriebe 25 das Überlagerungsgetriebe 12 noch einmal schematisiert dargestellt. In Übereinstimmung mit Fig. 1 ist die erste Eingangswelle mit 13, die zweite Eingangswelle mit 14 und die Ausgangswelle mit 15 bezeichnet. Das Sonnenrad 32 sitzt drehfest auf der ersten Eingangswelle 13 und das Sonnenrad 33 drehfest auf der Ausgangswelle 15. Das Schneckenrad 28 des Schneckengetriebes 26 ist drehfest mit dem Planetenträger 30 verbunden, der drehbar im Stellergehäuse 11 gelagert ist, im Ausführungsbeispiel der Fig. 2 sich über ein Nadellager drehbar auf der Ausgangswelle 15 und auf der Eingangswelle 13 abstützt. Das Sonnenrad 32 kämmt mit dem Planetenrad 311 des Stufenplaneten 31, und das Sonnenrad 33 kämmt mit dem Planetenrad 312 des Stufenplaneten 31, wobei die Planetenräder 311,312 drehfest miteinander verbunden sind und - wie bereits beschrieben - über ein Gleitlager drehend auf einer Achse 34 aufgenommen sind. Alternativ kann der Stufenplanet 31 mit Achse 34 in den Lagerstellen 36,37 gleitgelagert sein. Die in Fig. 2 dargestellte Achse 34 des einen Stufenplaneten 31 ist radial federnd im Planetenträger 30 aufgenommen. Hierzu sind die Lagerstellen 36,37, die die beiden Achsenden der Achse 34 aufnehmen, radial federnd im Planetenträger 30 angebunden, was durch die Zugfedern 57 in Fig,. 2 symbolisiert ist. Die Zugfedern 57 erzeugen eine zu den Sonnenrädern 32,33 hin gerichtete radiale Spannkraft. Die die radiale Auslenkung nach außen bei Überlast begrenzenden mechanischen Anschläge, die in dem Planetenträger 30 integriert sind, sind in Fig. 2 ebenfalls mit 41 bezeichnet.

Wie in Fig. 3 dargestellt ist, kann dieses zweistufige Planetengetriebe 25 alternativ auch dadurch realisiert werden, daß anstelle der zwei Sonnenräder 32, 33 zwei Hohlräder 58,59 mit den Stufenplaneten 31 kämmen, wobei das Hohlrad 58 dem Planetenrad 311 und das Hohlrad 59 dem Planetenrad 312 zugeordnet ist. Das Hohlrad 58 ist drehfest mit der ersten Eingangswelle 13 und das Hohlrad 59 ist drehfest mit der Ausgangswelle 15 verbunden. Zum radialen Spielausgleich ist wiederum ein Stufenplanet 31 radial federnd gelagert, und zwar derart, daß die Radialkraft nach außen wirkt und die Planetenräder 311,312 in die zugeordneten Hohlräder 58,59 kraftschlüssig einschiebt. Hierzu sind wiederum die Lagerstellen 36,37, der den Stufenplanet 31 drehbeweglich aufnehmenden Achse 34 radial verschieblich im Planetenträger 30 gelagert, wobei die Radialkraft nach außen wirkt und in Fig. 3 durch Druckfedern 60 symbolisiert ist. Dieses Planetengetriebe 25 hat ebenfalls radiale Spielfreiheit, doch ist es insoweit nachteilig gegenüber dem Planetengetriebe in Fig. 1 und 2 als durch die Hohlräder 58,59 der Durchmesser des Stellglieds zunimmt und zudem die teueren metallischen Hohlräder 58,59 die Fertigungskosten erhöhen.

## Patentansprüche

1. Stellglied zum überlagerten Lenkeingriff in einer Fahrzeug-Lenkvorrichtung, mit einem zwei Eingangswellen (13, 14) und eine Ausgangswelle (15) aufweisenden Überlagerungsgetriebe (12), bei dem das Überlagerungsverhältnis zwischen einer Änderung des Drehwinkels an der ersten Eingangswelle (13) und der Änderung des Drehwinkels an der mit der ersten Eingangswelle koaxialen Ausgangswelle durch einen mit der zweiten Eingangswelle (14) gekoppelten Elektromotor (20) in Abhängigkeit von vorgegebenen Parametern, z. B. Drehgeschwindigkeit der ersten Eingangswelle (13), veränderbar ist und bei dem das Überlagerungsgetriebe (12) ein zweistufiges, modifiziertes Planetengetriebe (25) mit einem Planetenträger (30), mindestens einem, vorzugsweise mindestens drei, Stufenplaneten (31), der aus zwei axial fluchtenden , drehfest miteinander verbundenen Planetenrädern (311, 312) besteht und drehbar am Planetenträger (30) gehalten ist, und zwei Sonnenräder (32, 33) aufweist, wobei jeweils das eine Planetenrad (311) des mindestens einen Stufenplaneten (31) mit dem einen Sonnenrad (32) und das andere Planetenrad (312) des Stufenplaneten (31) mit dem anderen Sonnenrad (33) kämmt, wobei die erste Eingangswelle (13) mit dem einen und die Ausgangswelle (15) mit dem anderen Sonnenrad (32, 33) jeweils drehfest verbunden ist und wobei der Planetenträger (30) über die zweite Eingangswelle (14) antreibbar ist, **dadurch gekennzeichnet, dass** zwischen zweiter Eingangswelle (14) und Planetenträger (30) ein selbsthemmendes Schneckengetriebe (26) mit einer drehfest mit der Eingangswelle (14) verbundenen Schnecke (27) und einem drehfest mit dem Planetenträger (30) verbundenen Schneckenrad (28) angeordnet ist und dass mit dem Schneckenrad (2B) ein koaxiales, kleineres Schneckenrad (42) über eine Ringfeder (43) so gekoppelt ist, dass die Zahnflanken der beiden Schneckenräder (28, 42) beidseitig an den Zahnflanken der Schnecke (27) anliegen.

2. Stellglied nach Anspruch 1, **dadurch gekennzeichnet, dass** der Planetenträger (30) und das mit dem Planetenträger (30) drehfest verbundene Schneckenrad (28) als Spritzgußteil aus einem Werkstoff, z. B. Aluminium oder Kunststoff, gefertigt sind.

3. Stellglied nach Anspruch 1, **dadurch gekennzeichnet, dass** der Planetenträger (30) aus Metall hergestellt und das. Schneckenrad (28) aus Kunststoff auf den vorgefertigten Planetenträger (30) aufgespritzt ist.

4. Stellglied nach einem der Anspruche 1 bis 3, **dadurch gekennzeichnet, daß** die Schnecke (27) des Schneckengetriebes (26) aus Kunststoff hergestellt ist.

5. Stellglied nach Anspruch 1, **dadurch gekennzeichnet, dass** Mittel zur Unterdrückung eines zwischen dem mindestens einen Stufenplaneten (31) und den Sonnenrädern (32, 33) vorhandenen Zahnflankenspiels vorgesehen sind.

6. Stellglied nach Anspruch 5, **dadurch gekennzeichnet, dass** die Mittel zur Unterdrückung des Zahnflankenspiels eine radial federnde Lagerung des Stufenplaneten (31) an dem Planetenträger (30) aufweisen.

7. Stellglied nach Anspruch 6, **dadurch gekennzeichnet, dass** der mindestens eine Stufenplanet (31) aus einer Achse (34) sitzt, deren Enden in jeweils einer im Planetenträger (31) ausgebildeten Lagerstelle (36, 37) aufgenommen sind und dass die Lagerstellen (36, 37) der Achse (34) radial federnd ausgebildet sind.

8. Stellglied nach Anspruch 7, **dadurch gekennzeichnet, daß** jede der federnden Lagerstellen (36, 37) auf einen Biegearm (40) angeordnet ist, dessen eines Armende federelastisch am Planetenträger (30) festgelegt ist, und dass der Biegearm (40) so ausgebildet ist, dass er bei montiertem Planetengetriebe (25) eine zu den kämmenden Sonnenrädern (32, 33) hin gerichtete, annähernd radiale Spannkraft erzeugt.

9. Stellglied nach Anspruch 8, **dadurch gekennzeichnet, dass** der Biegearm (40) so ausgebildet ist, dass er beim Montieren des Stufenplaneten (31) zwecks Einstellen einer radialen Spannkraft in die Gegenrichtung, weg von den kämmenden Sonnenrädern (32, 33), gedrückt wird.

10. Stellglied nach einem der Ansprüche 7 bis 9, **dadurch gekennzeichnet, dass** der Planetenträger (30) ein den mindestens einen Stufenplaneten (31) aufnehmendes Topfteil (301) aufweist, das mit einer ringförmigen Deckelplatte (35) verschlossen ist, und dass jeweils ein Biegearm (40) im Boden (301a) des Topfteils (301) und in der Deckelplatte (35) freigeschnitten ist und nahe seinem freien Armende die als Bohrung (39) ausgebildete Lagerstelle (36 bzw. 37) für die Achse (34) des Stufenplaneten (31) trägt.

11. Stellglied nach Anspruch 10, **dadurch gekennzeichnet, dass** der Biegearm (40) bogenförmig mit einer vorzugsweise zur Achse (34) des Planetenträgers (30) koaxial verlaufenden, inneren Begrenzungskante (401) ausgebildet ist.

12. Stellglied nach Anspruch 10 oder 11, **dadurch gekennzeichnet, dass** am Boden (301a) des Topfteils (301) und in der Deckelplatte (35) jeweils ein eine von den kämmenden Sonnenradern (32, 33) weggerichtete Bewegung des Biegearms (401 begrenzender Anschlag (41) angeordnet ist und vorzugsweise dass der Anschlag (41) von der Freischnittkante (351) des Bodens (301a) des Topfteils (301) bzw. der Deckelplatte (35) gebildet ist, die im Spaltabstand von dem Biegearm (40) verläuft.

13. Stellglied nach einem der Ansprüche 10 bis 12, **dadurch gekennzeichnet, dass** das freie Ende des Biegearms (40) bogenförmig und der Anschlag (41) am Boden (301a) des Topfteils (301) bzw. an der Deckelplatte (35) als eine der Bogenform angepaßte Mulde (351a) in der Freischnittkante (351) ausgebildet ist.

14. Stellglied nach einem der Ansprüche 6 bis 13, **dadurch gekennzeichnet, dass** mindestens drei Stufenplaneten (31) um gleiche Umfangswinkel zueinander versetzt am Planetenträger (30) angeordnet sind, von denen mindestens einer die radial federnde lagerung aufweist.

15. Stellglied nach einem der Ansprüche 1 bis 14, **dadurch gekennzeichnet, dass** anstelle der beiden Sonnenräder (32, 33) zwei Hohlräder (58, 59) mit Innenverzahnung drehfest mit der Ein- und Ausgangswelle (13, 15) verbunden sind und in gleicher weise mit den Planetenrädern (311, 312) des mindestens einen Stufenplaneten (31) kämmen.

## Claims

1. Actuator for superimposed steering intervention in a vehicle steering apparatus, with a variable-ratio gear unit (12) which has two input shafts (13, 14) and one output shaft (15) and in which the transmission ratio between a change in the angle of rotation at the first input shaft (13) and the change in the angle of rotation at the output shaft which is coaxial with the first input shaft can be changed by an electric motor (20), coupled to the second input shaft (14), as a function of predetermined parameters, e.g. the rotational speed of the first input shaft (13), and in which the variable-ratio gear unit (12) has a two-stage, modified planetary gear mechanism (25) with a planetary carrier (30), with at least one multi-step planet (31) and preferably with at least three multi-step planets (31), which multi-step planet (31) comprises two axially aligned planetary gears (311, 312) which are securely connected to one another so as to rotate together and is rotatably held on the planetary carrier (30), and two sun gears (32, 33), in each case one planetary gear (311) of the at least one multi-step planet (31) meshing with one sun gear (32) and the other planetary gear (312) of the multi-step planet (31) meshing with the other sun gear (33), the first input shaft (13) being securely connected to one sun gear (32) and the output shaft (15) being securely connected to the other sun gear (33) so as to rotate with the respective sun gear, and it being possible to drive the planetary carrier (30) via the second input shaft (14), **characterized in that** a self-locking worm gear mechanism (26) having a worm (27) securely connected to the second input shaft (14) so as to rotate with it and a worm gear (28) securely connected to the planetary carrier (30) so as to rotate with it is arranged between the input shaft (14) and the planetary carrier (30), and **in that** a coaxial, smaller worm gear (42) is coupled to the worm gear (28) via an annular spring (43) in such a way that the tooth flanks of the two worm gears (28, 42) bear on both sides against the tooth flanks of the worm (27).

2. Actuator according to Claim 1, **characterized in that** the planetary carrier (30) and the worm gear (28) securely connected to the planetary carrier (30) so as to rotate with it are produced as an injection-moulded part from one material, e.g. aluminium or plastic.

3. Actuator according to Claim 1, **characterized in that** the planetary carrier (30) is manufactured from metal and the worm gear (28) is made from plastic and injection-moulded onto the preproduced planetary carrier (30).

4. Actuator according to one of Claims 1 to 3, **characterized in that** the worm (27) of the worm gear mechanism (26) is manufactured from plastic.

5. Actuator according to Claim 1, **characterized in that** means are provided for suppressing tooth-flank play existing between the at least one multi-step planet (31) and the sun gears (32, 33).

6. Actuator according to Claim 5, **characterized in that** the means for suppressing the tooth-flank play have a radially resilient mounting of the multi-step planet (31) on the planetary carrier (30).

7. Actuator according to Claim 6, **characterized in that** the at least one multi-step planet (31) is seated on an axle (34), the ends of which are accommodated in each case in a bearing location (36, 37) formed in the planetary carrier (31), and **in that** the bearing locations (36, 37) for the axle (34) are configured to be radially resilient.

8. Actuator according to Claim 7, **characterized in that** each of the resilient bearing locations (36, 37) is arranged on a bending arm (40), one end of which is resiliently fixed to the planetary carrier (30), and **in that** the bending arm (40) is configured such that, when the planetary gear mechanism (25) is installed, the said bending arm produces an approximately radial stressing force directed towards the meshing sun gears (32, 33).

9. Actuator according to Claim 8, **characterized in that** the bending arm (40) is configured such that, during the installation of the multi-step planet (31), the said bending arm is pressed in the opposite direction, away from the meshing sun gears (32, 33), in order to set a radial stressing force.

10. Actuator according to one of Claims 7 to 9, **characterized in that** the planetary carrier (30) has a cup part (301) which accommodates the at least one multi-step planet (31) and is closed with an annular cover plate (35), and **in that** in each case one bending arm (40) is cut free in the base (301a) of the cup part (301) and in the cover plate (35) and bears, near its free end, the bearing location (36 and 37, respectively), configured as a bore, for the axle (34) of the multi-step planet (31).

11. Actuator according to Claim 10, **characterized in that** the bending arm (40) is of arcuate configuration with an inner bounding edge (401) which preferably extends coaxially to the axle (34) of the planetary carrier (30).

12. Actuator according to Claim 10 or 11, **characterized in that**, at the base (301a) of the cup part (301) and in the cover plate (35), there is in each case a stop (41) which limits a movement of the bending arm (40) directed away from the meshing sun gears (32, 33), and preferably **in that** the stop (41) is formed by the cut-free edge (351) of the base (301a) of the cup part (301) or of the cover plate (35) which extends with a gap between it and the bending arm (40).

13. Actuator according to one of Claims 10 to 12, **characterized in that** the free end of the bending arm (40) is of arcuate configuration and the stop (41) on the base (301a) of the cup part (301) or on the cover plate (35) is configured as a recess (351a), adapted to the arcuate shape, in the cut-free edge (351).

14. Actuator according to one of Claims 6 to 13, **characterized in that** at least three multi-step planets (31) are arranged on the planetary carrier (30) offset at identical circumferential angles from one another, of which multi-step planets at least one is mounted radially resiliently.

15. Actuator according to one of Claims 1 to 14, **characterized in that**, instead of the two sun gears (32, 33), two internal gears (58, 59) with internal toothing are securely connected to the input and output shafts (13, 15) so as to rotate with them and in the same way mesh with the planetary gears (311, 312) of the at least one multi-step planet (31).

## Revendications

1. Actionneur pour intervention superposée sur la direction dans le système de direction d'un véhicule, avec une boîte d'engrenages de superposition (12) présentant deux arbres d'entrée (13, 14) et un arbre de sortie (15), dans lequel on peut faire varier le rapport de superposition entre un changement de l'angle de rotation sur le premier arbre d'entrée (13) et un changement de l'angle de rotation sur un arbre de sortie coaxial avec le premier arbre d'entrée, par un moteur électrique (20) couplé au deuxième arbre d'entrée (14), en fonction de paramètres spécifiés, par exemple la vitesse de rotation du premier arbre d'entrée (13), et dans lequel la boîte d'engrenages de superposition (12) présente un engrenage planétaire modifié à deux étages (25), avec un porte-satellites (30), au moins une, de préférence au moins trois satellites étagés (31), composés de deux roues planétaires (311, 312) alignées dans l'axe, solidaires en rotation, et maintenus pivotant sur le porte-satellites (30), et présente deux roues solaires (32, 33), dans lequel chaque fois une roue planétaire (311) d'au moins un satellite étagé (31) est en prise avec une roue solaire (32) et l'autre roue planétaire (312) est en prise avec l'autre roue solaire (33), dans lequel le premier arbre d'entrée (13) est solidaire en rotation de la roue solaire (32) et l'arbre de sortie (15) avec l'autre roue solaire (33), et dans lequel le porte-satellites (30) peut être entraîné par le deuxième arbre d'entrée (14),
**caractérisé en ce qu'**
entre le deuxième arbre d'entrée (14) et le porte-satellites (30) est disposé un engrenage hélicoïdal irréversible (26) avec une vis sans fin (27) solidaire en rotation de l'arbre d'entrée (14) et avec une roue à vis sans fin (28) solidaire en rotation du porte-satellites (30), et à la roue à vis sans fin (28) une roue à vis sans fin plus petite, coaxiale (42) est couplée par un ressort annulaire (43), de façon à ce que les flancs des dents des deux roues à vis sans fin (28, 42) soient en contact des deux côtés avec les flancs des dents de la vis sans fin (27).

2. Actionneur selon la revendication 1,
**caractérisé en ce que**
le porte-satellites (30) et la roue à vis sans fin (28) solidaire en rotation du porte-satellites (30) sont fabriqués comme une pièce injectée en une seule matière, par exemple de l'aluminium ou du plastique.

3. Actionneur selon la revendication 1,
**caractérisé en ce que**
le porte-satellites (30) est fabriqué en métal et que la roue à vis sans fin (28) est injecté par surmoulage sur le porte-satellites préfabriqué.

4. Actionneur selon l'une des revendications 1 à 3,
**caractérisé en ce que**
la vis sans fin (27) de l'engrenage à vis sans fin (26) est fait en plastique.

5. Actionneur selon la revendication 1,
**caractérisé en ce que**
des moyens sont prévus pour la suppression du jeu des flancs des dents qui existe entre au moins un satellite étagé (31) et les roues solaires (32, 33).

6. Actionneur selon la revendication 5,
**caractérisé en ce que**
les moyens de suppression du jeu des flancs des dents présentent une suspension élastique dans le sens radial des satellites étagée (31) sur le porte-satellites (30).

7. Actionneur selon la revendication 6,
**caractérisé en ce qu'**
au moins un satellite étagé (31) se trouve sur un axe (34) dont les extrémités sont prises dans un palier (36, 37) formé dans le porte-satellites (31), et les paliers (36, 37) de l'axe (34) sont formés élastiques dans le sens radial.

8. Actionneur selon la revendication 7,
**caractérisé en ce que**
chacun des paliers élastiques (36, 37) est disposé sur un bras flexible (40), dont une extrémité du bras est fixée élastiquement au porte-satellites (30), et le bras flexible (40) est formé de telle sorte que lorsque l'engrenage planétaire (25) est monté, il produit une force de tension à peu près radiale dirigée vers les roues solaires (32, 33) en prise.

9. Actionneur selon la revendication 8,
**caractérisé en ce que**
le bras flexible (40) est formé de telle sorte qu'au montage des satellites étagés (31), pour établir une force de tension radiale, on appuie dans la direction opposée, en s'écartant des roues solaires (32, 33) en prise.

10. Actionneur selon l'une des revendications 7 à 9,
**caractérisé en ce que**
le porte-satellites (30) présente au moins une pièce en forme de pot (301), logeant au moins un satellite étagé (31), et fermée par une plaque de couverture circulaire (35), et chaque fois un bras flexible (40) est découpé dans le fond (301a) de la pièce en forme de pot (301) et dans la plaque de couverture (35), et porte près de son extrémité de bras libre le palier (36 ou 37) en forme de trou (39) pour l'axe (34) du satellite étagé (31).

11. Actionneur selon la revendication 10,
**caractérisé en ce que**
le bras flexible (40) est en forme d'arc, avec une arête intérieure de limitation, courant de préférence coaxialement à l'axe (34) du porte-satellites (30).

12. Actionneur selon les revendications 10 ou 11,
**caractérisé en ce que**
sur le fond (301a) de la pièce en forme de pot (301) et dans la plaque de couverture (35) est disposée chaque fois une butée (41) limitant le mouvement du bras flexible (40) lorsqu'il s'écarte des roues solaires en prise (32, 33) et, de préférence, la butée (41) est formée de l'arête libre (351) du fond (301a) de la pièce en forme de pot (301) ou de la plaque de couverture (35), qui s'étend à distance d'écartement du bras flexible (40).

13. Actionneur selon l'une des revendications 10 à 12,
**caractérisé en ce que**
l'extrémité libre du bras flexible (40) est en forme d'arc et la butée (41) est formée sur le fond (301a) de la pièce en forme de pot (301) ou sur la plaque de couverture (35), comme une cuvette (351a) adaptée à la forme de l'arc, dans l'arête libre (351).

14. Actionneur selon l'une des revendications 6 à 13,
**caractérisé en ce qu'**
au moins trois satellites étagés (31), décalés en périphérie à angles égaux l'un de l'autre, sont disposés sur le porte-satellites (30), dont au moins un présente le logement élastique dans le sens radial.

15. Actionneur selon l'une des revendications 1 à 14,
**caractérisé en ce qu'**
à la place des deux roues solaires (32, 33), deux roues creuses (58, 59) avec denture interne sont solidaires en rotation de l'arbre d'entrée et de l'arbre de sortie (13, 15) et, de la même façon, sont en prise avec les roues planétaires (311, 312) du au moins un satellite étagé (31).
